# EUROPÄISCHE PATENTSCHRIFT

(11) **EP 2 532 629 B1**
(45) Veröffentlichungstag und Bekanntmachung des Hinweises auf die Patenterteilung: **23.06.2021**
(21) Anmeldenummer: 12168707.3
(22) Anmeldetag: 21.05.2012
(51) Int. Cl.: C03C 10/14, C03C 17/00, F24C 15/10

(54) **Hochfeste eingefärbte, beidseitig glatte Glaskeramik als Kochfläche**
Coloured, high strength glass ceramic, smooth on both sides, used as cooktop
Vitrocéramique haute résistance, colorée et lisse des deux côtés, utilisée comme plaque électrique

(30) Priorität: 06.06.2011 DE 102011050867
(43) Veröffentlichungstag der Anmeldung: 12.12.2012
(60) Teilanmeldung: 13186204.7
(73) Patentinhaber: Schott AG, 55122 Mainz (DE)
(72) Erfinder: Weiss, Evelin, 55131 Mainz (DE); Schmidbauer, Dr. Wolfgang, 55126 Mainz (DE); Zenker, Dr. Thomas, 55268 Nieder-Olm (DE); Hoffmann, Dr. Ulf, 64319 Pfungstadt (DE); Dörk, Birgit, 55128 Mainz (DE); Knoche, Silke, 55291 Saulheim (DE); Taplan, Martin, 55120 Mainz (DE); Siebers, Dr. Friedrich, 55283 Nierstein (DE); Kraus, Thomas, 55271 Stadecken-Elsheim (DE); Klippe, Dr. Lutz, 65185 Wiesbaden (DE)
(74) Vertreter: Herrmann, Jochen

(56) Entgegenhaltungen:
- WO-A1-2012/010278
- DE-A1-102004 059 728
- DE-A1-102008 050 263
- DE-A1-102009 013 127
- DE-A1-102011 050 873
- DE-C2- 19 939 787
- DE-U1-202010 018 044
- US-A1- 2009 314 034
- US-A1- 2012 085 336

## Beschreibung

Die Erfindung betrifft eine Glaskeramikkochfläche, mit einer eine Kochfläche bildenden ebenen Oberseite und einer glatten Unterseite, wobei das Glaskeramik-Material der Kochfläche Transmissionswerte von größer als 0,1 % im Bereich des sichtbaren Lichtes im gesamten Wellenlängenbereich größer als 420 nm, eine Lichttransmission im Sichtbaren von 0,8 - 2,5 % und eine Transmission im Infraroten bei 1600 nm von 0 - 85 % aufweist, und wobei das Glaskeramik-Material als vorherrschende Kristallphase Hochquarz-Mischkristalle aufweist.

Kochfelder mit einer Glaskeramikplatte als Kochfläche sind gängiger Stand der Technik. Solche Glaskeramikplatten liegen üblicherweise als ebene Platten vor oder sind dreidimensional verformt.

Glaskeramiken mit Hochquarz-Mischkristallen als vorherrschender Kristallphase werden aus kristallisierbaren Lithiumaluminiumsilikat-Gläsern hergestellt.

Die Herstellung dieser Glaskeramiken erfolgt in mehreren Stufen.

Bei der großtechnischen Herstellung von Glaskeramik wird zunächst das kristallisierbare Ausgangsglas aus einem Gemisch aus Scherben und pulverförmigen Gemengerohstoffen bei Temperaturen üblicherweise zwischen 1500 und 1650 °C erschmolzen. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten der Schmelze. Auch wenn diese Stoffe fest im Glasgerüst eingebunden sind, so sind sie doch unter Sicherheits- und Umweltschutzaspekten nachteilig. So müssen bei der Rohstoffgewinnung, -aufbereitung und wegen der Verdampfung bei der Schmelze besondere Vorsichtsmaßnahmen ergriffen werden.

Neuerdings wird insbesondere der Einsatz von SnO₂ als unbedenkliches Läutermittel beschrieben. Um gute Blasenqualitäten zu erreichen, werden bei konventionellen Schmelztemperaturen (maximal ca. 1680 °C) neben SnO₂ bevorzugt Halogenid-Verbindungen als zusätzliche Läutermittel eingesetzt. So wird in den japanischen Anmeldungen JP 11 100 229 A und JP 11 100 230 A der Einsatz von 0,1 - 2 Gew.-% SnO₂ und 0 -1 Gew.-% Cl beschrieben. Nach diesen Schriften wird die Einfärbung durch Zusatz von V₂O₅ als alleiniges Färbemittel erreicht.

Der Zusatz von 0,05 - 1 Gew.-% Fluor (US 2007 0004578 A1) und 0,01 - 1 Gew.-% Brom (US 2008 0026927 A1) zur Unterstützung der Läuterung mit SnO₂ wird ebenfalls offenbart. Auch in diesen Schriften sind Läutertemperaturen unterhalb 1700°C beschrieben. Das Hauptfärbemittel ist V₂O₅. Nachteilig ist der Zusatz der Halogenide, da sie bei der Schmelztemperatur stark verdampfen und dabei toxische Verbindungen, wie z. B. HF bilden.

Der Einsatz von SnO₂ in Verbindung mit Hochtemperaturläuterung oberhalb 1700 °C zur Erreichung guter Blasenqualitäten wird in der DE 199 39 787 C2 beschrieben. Diese Schrift liefert aber keinen Hinweis auf das Erreichen einer guten Anzeigefähigkeit im Wellenlängenbereich ab 420 nm.

Nach dem Einschmelzen und Läutern erfährt das Glas üblicherweise eine Heißformgebung durch Walzen oder neuerdings Floaten, um Platten herzustellen. Für eine wirtschaftliche Herstellung ist zum einen eine niedrige Schmelztemperatur und eine niedrige Verarbeitungstemperatur V_{A} gewünscht, zum anderen darf das Glas bei der Formgebung keine Entglasung zeigen. Das heißt, es dürfen sich keine störenden Kristalle bilden, die in den Ausgangsgläsern und den daraus hergestellten Glaskeramiken die Festigkeit beeinträchtigen. Da die Formgebung in der Nähe der Verarbeitungstemperatur V_{A} (Viskosität 10⁴ dPas) des Glases stattfindet, muss gewährleistet sein, dass die obere Entglasungstemperatur der Schmelze in der Nähe und günstigerweise unter der Verarbeitungstemperatur liegt, um die Bildung störender Kristalle zu vermeiden.

Anschließend wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 und 800 °C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen die Hochquarz-Mischkristalle auf diesen Keimen auf. Hohe Kristallwachstumsgeschwindigkeiten, wie sie für eine wirtschaftliche, schnelle Keramisierung gewünscht sind, werden bei Temperaturen von 850 bis 950 °C erreicht. Bei dieser maximalen Herstelltemperatur wird das Gefüge der Glaskeramik homogenisiert und die optischen, physikalischen und chemischen Eigenschaften der Glaskeramik eingestellt. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einen Bereich von ca. 950 bis 1200 °C. Mit dem Übergang von Hochquarz- zu Keatit-Mischkristallen erhöht sich der thermische Ausdehnungskoeffizient der Glaskeramik und die Transparenz verringert sich durch die mit der Vergrößerung der Kristalle einhergehende Lichtstreuung. In der Regel sind Glaskeramiken mit Keatit-Mischkristallen als Hauptphase daher transluzent oder opak und die damit verbundene Lichtstreuung wirkt sich negativ auf die Anzeigefähigkeit aus.

Eine Schlüsseleigenschaft dieser Glaskeramiken mit Hochquarz-Mischkristallen als Hauptkristallphase ist die Herstellbarkeit von Werkstoffen, die über einen äußert niedrigen Wärmeausdehnungskoeffizienten im Bereich von Raumtemperatur bis 700 °C und darüber von < 0,5 × 10⁻⁶/K verfügen. Aufgrund der niedrigen thermischen Ausdehnung besitzen diese Glaskeramiken eine ausgezeichnete Temperaturunterschiedsfestigkeit und Temperaturwechselbeständigkeit.

Bei der Anwendung als Kochfläche hat die technische Entwicklung aufgrund der Erfordernisse aus dem praktischen Einsatz zu sehr spezifischen, teilweise gegenläufigen Anforderungen an die Transmission geführt.

Um die störende Durchsicht auf die technischen Bauelemente unter der Glaskeramik-Kochfläche zu verhindern und um die Blendwirkung durch strahlende Heizkörper, insbesondere helle Halogen-Heizkörper zu vermeiden, sind die Glaskeramik-Kochflächen in ihrer Lichttransmission begrenzt. Für die Anzeigefähigkeit jedoch ist eine gewisse Lichttransmission erforderlich, um beim Einsatz handelsüblicher Bauteile, z. B. Signalgeber, LED, usw. genügend Helligkeit zu gewährleisten. Um diesen Anforderungen zu genügen, sind Glaskeramik-Kochfiächen üblicherweise auf Werte der Lichttransmission von 0,5 bis 2,5 % eingestellt. Dies wird durch Zusätze von färbenden Elementen erreicht. Glaskeramik-Kochflächen erscheinen dann unabhängig je nach verwendetem Farbelement aufgrund der niedrigen Lichttransmission in Aufsicht schwarz, in Durchsicht je nach verwendeten farbgebenden Elementen meist rot, rotviolett oder braunorange.

Farbige Anzeigen bestehen aus Licht emittierenden elektronischen Bauteilen, meist Leuchtdioden, die unterhalb der Kochfläche eingebaut werden. Sie sind insbesondere bei Induktionskochflächen für den Bedienungskomfort und den sicheren Betrieb erforderlich. So werden beispielsweise die aktuelle Heizleistung oder Restwärme der verschiedenen Kochzonen optisch angezeigt. Die Anzeige der Restwärme ist für die sichere Handhabung wichtig, wenn die Heizkörper nicht strahlen oder wenn, wie bei induktiv beheizten Kochflächen generell nicht zu erkennen ist, dass die Kochfläche heiß ist. Die üblichen roten Leuchtdioden strahlen bei Wellenlängen um 630 nm. Um den Bedienungskomfort und die technischen Funktionen zu verbessern, aber auch um den Hausgeräteherstellern über das Design eine Möglichkeit zur Differenzierung zu eröffnen, sind neben den üblichen roten auch andersfarbige Anzeigen gewünscht.

Es sind Kochfelder japanischer Herkunft bekannt, bei denen eine LCD-Anzeige vorhanden ist, die grün, orange und rot hinterleuchtet werden kann.

Die unterschiedlichsten Farben, mit Ausnahme der Farbe rot, die hierbei verwendet werden, dienen heute ausschließlich ästhetisch Aspekten. Die Farbe rot zeigt jedoch üblicherweise immer Gefahren an.

Sicherheitsrelevante Informationen sind nur über gleichfarbige Anzeigelemente oder Symbole in Siebensegmentanzeigen codiert und bekannt. In sicherheitskritischen Situationen ist der Anwender gezwungen, nachzudenken, was die Anzeige ihm anzeigen will. Hierbei kommt hinzu, dass durch den hohen Technisierungsgrad in Küchen und die vielfältigen vorhandenen Geräte in Küchen, wie Kochherde, Backöfen, Mikrowellen, Grillgeräte, Dunstabzugshauben, Kühl- und Gefriergeräte sowie Brotschneidemaschinen etc., eine Flut von Informationen auf den Anwender wirkt, wobei die Informationen von Gerät zu Gerät unterschiedlich sind. Beispielsweise kann ein rotes Blinklicht bei dem einen Gerät eine Gefahr bedeuten, während es bei dem anderen Gerät einen Betrieb anzeigt.

Bei handelsüblich eingefärbten Kochflächen kann der Anwender nicht über die Farben den Betriebs- und Fehlerzustand erkennen, also inwieweit das Gerät betriebsbereit ist und ob ein Hinweis auf einen möglichen Fehlerzustand vorhanden ist.

Ein früherer Typ von Glaskeramik-Kochflächen, bekannt unter dem Namen Ceran Color®, hergestellt von der SCHOTT AG, besaß gute farbliche Anzeigefähigkeit. Ceran Color® ist durch Zusätze von NiO, CoO, Fe₂O₃ und MnO gefärbt und durch Sb₂O₃ geläutert. Durch diese Kombination von Farboxiden wird eine Lichttransmission von typischerweise 1,2 % für Kochflächen mit üblicher Dicke von 4 mm eingestellt. Die Transmission im Bereich von 380 nm bis 500 nm beträgt je nach Wellenlänge 0,1 - 2,8 %. Bei einer für rote Leuchtdioden üblichen Wellenlänge von 630 nm beträgt die Transmission ca. 6 %. Nachteilig bei diesem früheren Typ von Glaskeramik-Kochflächen ist, dass die verwendeten Farboxide auch sehr stark im Infraroten absorbieren. Die IR-Transmission bei 1600 nm beträgt weniger als 20 %. Damit ist die Ankochgeschwindigkeit herabgesetzt. Die Transmissionskurve von Ceran Color® ist in dem Buch "Low Thermal Expansion Glass Ceramics", Editor Hans Bach, Springer-Verlag Berlin Heidelberg 1995, auf Seite 66 abgebildet (ISBN 3-540-58598-2). Die Zusammensetzung ist in dem Buch "Glass-Ceamic Technology", Wolfram Höland und George Beall, The American Ceramic Society 2002 in Tabelle 2 - 7 aufgeführt.

In neueren, weiter entwickelten Glaskeramik-Kochflächen wird meist V₂O₅ zur Einfärbung verwendet, weil es die besondere Eigenschaft besitzt, im Bereich des sichtbaren Lichtes zu absorbieren und im Bereich der Infrarotstrahlung eine hohe Transmission zu erlauben.

Die Einfärbung durch V₂O₅ stellt sich als ein recht komplexer Prozess dar. Wie in früheren Untersuchungen (DE 19939787 C2) gezeigt wurde, ist für die Überführung des Vanadiumoxids in den färbenden Zustand ein Redoxvorgang Voraussetzung. Im kristallisierbaren Ausgangsglas färbt das V₂O₅ noch relativ schwach und führt zu einem leicht grünlichen Farbton. Bei der Keramisierung findet der Redoxvorgang statt, das Vanadium wird reduziert und der Redoxpartner wird oxidiert. Als primärer Redoxpartner fungiert das Läutermittel. Gezeigt wurde das durch Mössbauer-Untersuchungen an Sb- und Sn-geläuterten Zusammensetzungen. Beim Keramisieren wird ein Teil des Sb³⁺ bzw. Sn²⁺ im Ausgangsglas in die höhere Oxidationsstufe Sb⁵⁺ bzw. Sn⁴⁺ überführt. Es ist anzunehmen, dass das Vanadium in reduzierter Oxidationsstufe als V⁴⁺ oder V³⁺ in den Keimkristall eingebaut wird und dort durch Elektronen-Chargetransfer-Reaktionen intensiv färbt. Als weiterer Redoxpartner kann auch TiO₂ die Einfärbung durch Vanadiumoxid verstärken. Neben der Art und Menge der Redoxpartner im Ausgangsglas hat auch der Redoxzustand der im Glas bei der Schmelze eingestellt wird einen Einfluss. Ein niedriger Sauerstoff-Partialdruck pO₂ (reduzierend eingestellte Schmelze) z.B. durch hohe Schmelztemperaturen verstärkt die Farbwirkung des Vanadiumoxids.

Einen weiteren Einfluss auf die Farbwirkung des Vanadiumoxid haben die Keramisierungsbedingungen. Insbesondere führen hohe Keramisierungstemperaturen und längere Keramisierungszeiten zu einer stärkeren Einfärbung.

Die beschriebenen Zusammenhänge bei der Einfärbung durch V₂O₅ wird der Fachmann nutzen, um durch eine bestimmte Glaszusammensetzung, bestimmte Redox-Einstellungen des pO₂ bei der Schmelze und die Keramisierungsbedingungen den gewünschten Transmissionsverlauf einzustellen. Bisher war es aber nicht möglich, alle Anforderungen wie spezifikationsgerechte Lichttransmission, hohe IR-Transmission, sowie Anzeigefähigkeit für standardmäßige rote Leuchtdioden zusammen mit der gewünschten verbesserten Anzeigefähigkeit für andersfarbige Leuchtanzeigen zu erreichen.

Die Form der Absorptionsbande des Vanadinoxids und damit die Transmission im Bereich des sichtbaren Lichtes im gesamten Wellenlängenbereich größer als 450 nm bis zur oberen Grenze von 750 nm konnte nicht zu höheren Transmissionen angepasst werden.

Beispiele für solche V₂O₅-gefärbten Glaskeramik-Kochflächentypen sind das Sb₂O₃-geläuterte Ceran Hightrans® und das SnO2-geläuterte Ceran Suprema®, die von der Firma SCHOTT AG hergestellt werden. Die Transmissionskurven dieser beiden Glaskeramiken sind veröffentlicht in dem Buch "Low Thermal Expansion Glass Ceramics", Second Edition, Editor Hans Bach, Dieter Krause, Springer-Verlag Berlin Heidelberg 2005, auf Seite 63 (ISBN 3-540-24111-6).

Der Transmissionswert von 0,1 % wird bei den genannten Glaskeramik-Kochflächen und bei anderen im Markt befindlichen Glaskeramik-Kochflächen in dem für die Sichtbarkeit farbiger, insbesondere blauer und grüner Anzeigen wichtigen Wellenlängen von ca. 450 - 550 nm unterschritten. Andere wesentliche Anforderungen an die Transmission werden von diesen Glaskeramik-Kochflächen erfüllt: hohe Infrarot-Transmission für hohe Ankochgeschwindigkeiten, spezifikationsgerechte Transmission für standardmäßige rote Leuchtdioden bei ca. 630 nm und eine Lichttransmission um 1,5 %.

Um diesen Nachteil zu beheben offenbart die europäische Patentanmeldung EP 1465460 A2 eine Glaskeramik-Kochfläche, die im CIE-Farbsystem gemessen, mit Normlicht C einen Y-Wert (brightness) von 2,5 - 15 besitzt, bei einer Dicke von 3 mm. Die Bezeichnungen "brightness" und Lichttransmission entsprechen dergleichen Messgröße. Der Y-Wert ist identisch mit dem Wert der Lichttransmission, gemessen nach DIN 5033. Mit dieser Lichttransmission werden verbesserte Anzeigen für blaue und grüne Leuchtdioden erreicht. Die offenbarten Zusammensetzungen sind mit As₂O₃ und/oder Sb₂O₃, teilweise in Kombination mit SnO₂ geläutert. Die Einfärbung wird durch V₂O₅ vorgenommen.

In dem Vergleichsbeispiel wird aufgezeigt, dass bei einer Lichttransmission von 1,9 % die Anzeigefähigkeit für blaue und grüne Leuchtdioden mit den aufgeführten Materialzusammensetzungen unzureichend ist. Die beanspruchten hohen Werte der Lichttransmission von mindestens 2,5 % und bevorzugt höher sind jedoch nachteilig, hinsichtlich der Abdeckung der elektronischen Bauteile unterhalb der Kochfläche. Außerdem wird das ästhetische schwarze Erscheinungsbild der Kochfläche in Aufsicht beeinträchtigt.

Aus der DE 10 2009 013 127 A1 ist eine Kochfläche aus Glaskeramik-Material bekannt, die über Transmissionswerte von größer als 0,1 % im Bereich des sichtbaren Lichtes im gesamten Wellenlängenbereich von größer als 450 nm, eine Lichttransmission im Sichtbaren von 0,8 - 5 % (vorzugsweise 0,8 - 2,5 %) und eine Transmission im Infraroten bei 1600 nm von 45 - 85 % verjüngt. Bei einer solchen Kochfläche ist sichergestellt, dass die störende Durchsicht auf die technischen Bauelemente unter der Glaskeramik-Kochfläche verhindert wird und das ästhetische schwarze Erscheinungsbild in Aufsicht gewährleistet bleibt. Strahlende Heizkörper sind im Betrieb sichtbar und übliche rote Leuchtdioden-Anzeigen gut erkennbar. Durch die Transmission von größer als 0,1 % im Bereich des sichtbaren Lichtes im gesamten Wellenlängenbereich größer als 450 nm sind auch andersfarbige Anzeigen gut erkennbar. Angesichts der Leuchtkraft handelsüblicher blauer, grüner, gelber oder oranger Leuchtdioden ist dieser Transmissionswert ausreichend und stellt eine deutliche Verbesserung gegenüber dem Stand der Technik dar. Insbesondere die Anzeige mit blauen und grünen Farben ist deutlich verbessert. Anzeigen mit weißem Licht werden durch den Transmissionsverlauf im gesamten Wellenlängenbereich größer als 450 nm farblich weniger verfälscht.

Die Formgebung der Glaskeramikplatten für die Kochfelder wird über einen besonderen Walzprozess mit Ober- und Unterwalze durchgeführt. Das schmelzflüssige Ausgangsglas wird über eine Ziehdüse den Walzen zugeführt. Die Walzen bestehen aus einem speziellen Material, um eine kontrollierten Wärmeentzug zwischen Glas und Walzen zu gewährleisten. Es müssen während der Heißformgebung durch die Walzen unkontrollierte Kristallisation beim Formen des Glasbandes vermieden werden. Das Glasband wird über einen Rollentisch in einen Rollenkühlofen geführt. Das Glasband wird anfangs auf Temperaturen höher als Transformationstemperatur und niedriger als Keimbildungs- und Kristallisationstemperaturen des Ausgangsglases gehalten, um die möglichen Spannungen abzubauen. Nach Kühlung des Glasbandes auf Raumtemperatur wird das Glasband zugeschnitten, kantenbearbeitet, mit keramischen Farben dekoriert und anschließend im Keramisierungsofen in eine Glaskeramik umgewandelt.

Diese Glaskeramikplatten für Kochflächen besitzen eine noppenartige Unterseitenstruktur um die Festigkeitsanforderungen an Glaskeramikplatten für Kochfelder zu erfüllen. Diese Noppen werden über eine genoppte Unterwalze bei der Heißformgebung in die Glasbandunterseite eingeprägt.

Diese Noppenstruktur besteht aus regelmäßigen Mustern aus Kalotten, die rund oder oval oder auch anders sein können. Die Noppen bewirken einen Schutz der Glaskeramikplattenunterseite gegenüber festigkeitsreduzierender Verletzungen.

Die Festigkeit wird letztendlich dadurch erzielt, dass auf den Noppenkappen die "Verletzungen" der Unterseite gesammelt werden und in den "Tälern", wo bei Belastungen die maximalen gefährlichen Zugspannungen auftreten, wird die Kerbwirkung verringert, da die Glaskeramikoberfläche nicht beschädigt worden ist.

Der Nachteil dieser Noppen ist die Streuung des Lichtes, welches durch die Glaskeramikplatte geführt wird. Es ist nicht möglich Anzeigen oder Strukturen unterhalb der Glaskeramikplatte verzerrungsfrei sichtbar zu machen. Anzeigen und auch die Kochzonen werden daher leicht verzerrt wahrgenommen.

Aus der DE 41 04 983 C1 ist das lokale Aufbringen einer Silikonschicht bekannt um die gängigen Leuchtanzeigen verzerrungsfrei sichtbar zu machen. Diese Silikonschicht bedingt aber einen Zusatzaufwand, hat ein schlechtes Transmissionsverhalten und ist wenig temperaturstabil bei den hohen Heiztemperaturen der Kochfläche. Deswegen kann diese Immersionsschicht nur lokal in kalten Bereichen der Kochfläche eingesetzt werden. Die verzerrende Ansicht der Heizzonen bleibt bestehen.

Es ist Aufgabe der Erfindung, eine Glaskeramikkochfläche der eingangs erwähnten Art zu schaffen, welche sich durch verbesserte Anwendungseigenschaften auszeichnet, bspw. gute Anzeigequalitäten von Displayanzeigen ermöglicht und/oder die Funktionalität von Heizelementen und/oder Sensoreinheiten verbessert.

Diese Aufgabe wird durch eine Glaskeramikkochfläche gemäß Anspruch 1 gelöst.

Erfindungsgemäß wird demnach vorgeschlagen, dass die Unterseite der Kochfläche ebenso wie die Oberseite der Kochfläche nicht strukturiert und eben ausgebildet ist. Sie weist demnach nicht die aus dem Stand der Technik bekannten gängigen Noppen auf sondern ist wie die Oberfläche glatt. Über diese Planparallelität der Oberseite und der Unterseite lassen sich gute Anzeigequalitäten verwirklichen, Insbesondere in Verbindung mit dem verwendeten Glaskeramik-Material können verzerrungsfrei farbige (z. B. blaue) bisher nicht mögliche Anzeigen mit einer deutlich verbesserten Anzeigenschärfe verwirklicht werden.

Es ist vorgesehen, dass auf die Unterseite mindestens eine Beschichtung und/oder Folie aufgebracht ist. Dadurch dass die Unterseite eben und glatt ausgebildet ist, lassen sich auch Beschichtungen mit einer gleichmäßigen Dicken verwirklichen, die dann auch gleichzeitig uniforme Eigenschaften aufweist. Die Beschichtung und/oder Folie ist dabei Teil einer Anzeige und bildet eine Maskierung mit lichtdurchlässigen und lichtundurchlässigen Bereichen. Diese Maskierung ist dann zwischen der Kochfläche und einem Leuchtelement angeordnet, wobei das Leuchtelement sein Licht durch die lichtdurchlässigen Bereiche in die Kochfläche abgibt und damit kann das Licht dann an der Oberseite der Kochfläche ausgekoppelt werden und zwar verzerrungsfrei, wobei eine Konturscharfanzeige entsprechend der Maskierung verwirklicht wird.

Die Beschichtung und/oder Folie bildet eine Maskierung mit lichtdurchlässigen und lichtundurchlässigen Bereichen, wobei im Bereich unter der beschichteten Unterseite ein Leuchtelement, z. B. eine 7-Segment-Anzeige oder eine Displayeinheit beabstandet angeordnet ist.

Es hat sich gezeigt, dass mit der erfindungsgemäßen beidseitig glatten Gestaltung der Kochfläche in Verbindung mit dem verwendeten Glaskeramik-Material Kochflächendicken im Bereich zwischen 2 mm und 6 mm, vorzugsweise im Bereich zwischen 3 und 5 mm, verwirklichen lassen. Dabei ergibt sich eine für Kochflächenanwendungen ausreichende mechanische Stabilität.

Es hat sich gezeigt, dass die Dicke der Beschichtung im Bereich zwischen 100 nm und 2 mm liegen sollte.

Besonders bevorzugt ist die Beschichtung mindestens bis 85 °C temperaturstabil. Dabei eignet sich die Beschichtung insbesondere für den Bereich der Anzeigen und Bedienelemente. Sie kann selbst elektrisch leitfähig ein Heizelement bilden.

Eine einfache Fertigung wird dann möglich, wenn die Beschichtung eine Sol-Gel-Beschichtung oder eine ITO-Beschichtung ist. Beispielsweise können mit ITO-Beschichtungen als temperaturabhängige Materialien ortsauflösende Berührsensoren in strukturierter Form oder nichtstrukturierte großflächige Temperatursensoren verwirklicht werden. Denkbar ist auch, dass als Beschichtung eine SilikonBeschichtung verwendet ist.

Eine denkbare Erfindungsvariante ist, dass die der Unterseite der Kochfläche abgewandte Rückseite der Beschichtung mit einer Strukturierung, insbesondere einer mechanischen Flächenverformung oder thermisch geprägten Verformung, versehen ist. Mittels dieser Modifikation dieser Beschichtung können die Beschichtungseigenschaften erweitert werden. Beispielsweise kann die Beschichtung durch mechanische Verformung, beispielsweise unter Verwendung von Prägewalzen strukturiert werden. Denkbar ist es auch, dass die Beschichtung thermisch, beispielsweise durch Verwendung von Lasern gezielt beeinflusst wird oder dass die Beschichtung geätzt wird. Die Beschichtung kann beispielsweise als elektrische Isolierschicht ausgebildet sein oder auch elektrisch leitfähig sein. Mit elektrisch leitfähigen Beschichtungen lassen sich beispielsweise Induktionsspulen bilden, die dann die Heizelemente bilden. Die glatte Unterseite der Kochfläche ermöglicht eine gleichmäßige Beschichtungsdicke, so dass die Leiterbahn der Induktionsspule einen gleichmäßigen Stromleitungsquerschnitt bildet. Benachbart zu der aufgebrachten Induktionsspule kann eine elektrisch isolierende Schicht auf die Unterseite der Kochfläche aufgetragen sein.

Eine weitere Erfindungsvariante ist, dass die Beschichtung eine Elektrode eines berührungsempfindlichen Sensors (Touch-Sensor), eines Topfsensors oder eines Topfgrößensensors ist. Solche Elektroden können in strukturierter Form als Elektroden für Touch-Sensoren insbesondere im Bereich des Bedienbereiches die Touch-Elektronik überdecken, insbesondere ganzflächig über das Kochfeld um z. B. Touchfunktionalitäten auch in unmittelbarer Nähe der Kochzone zu ermöglichen ausgebildet sein. Das Elektrodendesign kann über mindestens zwei geteilte Elektroden so ausgelegt werden, dass es zwischen einer Fingerberührung und einem größeren Topfboden unterscheiden kann. Weiterhin ist es denkbar, dass die Elektroden ganzflächig strukturiert als Topfsensoren und Topfgrößensensoren ausgebildet sind.

Denkbar ist es weiterhin, dass die Beschichtung eine thermische Isolation bildet. Hierdurch können gezielt Wärmetransporte zum Zwecke der Energieeinsparung unterbunden werden.

Eine besonders bevorzugte Erfindungsvariante ist derart, dass die Oberflächerauhigkeit der Unterseite der Kochfläche Rₐ ≤ 5 mm, im üblichen Scanbereich liegt. Mit dieser Oberflächenrauhigkeit lassen sich zum einen konturscharfe Displays, insbesondere wenn sie auf Abstand montiert sind, erzeugen. Zum anderen bildet eine derartige Oberflächenrauhigkeit eine ausreichend starke Bindung für die Beschichtung.

Eine besonders bevorzugte Erfindungsausgestaltung ist dadurch gekennzeichnet, dass die Kochfläche von einem Rahmen umgeben ist, und dass der Rahmen die Unterseite im Randbereich der Kochfläche unterfasst. Die glatte Unterseite der Kochfläche ermöglicht eine besonders gute Abdichtung zwischen der Kochfläche und dem Rahmen.

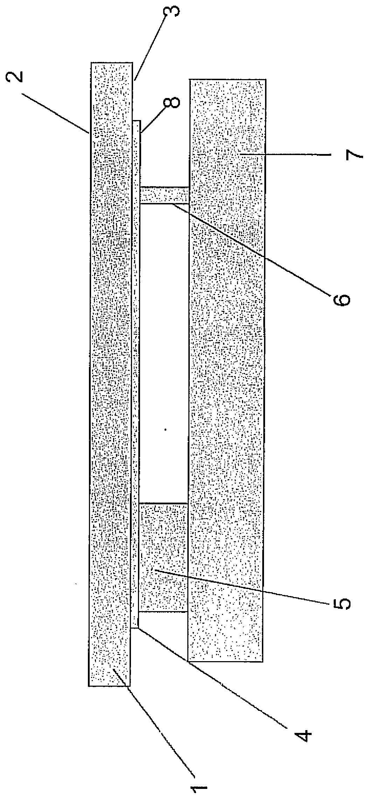

Die Erfindung wird nachfolgend anhand des in der Zeichnung dargestellten Ausführungsbeispieles näher erläutert. Diese Zeichnung zeigt in schematischer Darstellung und in Seitenansicht eine Kochfläche 1, die aus einem Glaskeramik-Material besteht. Die Kochfläche 1 weist eine Oberseite 2 und eine Unterseite 3 auf. Sowohl die Oberseite 2 als auch die Unterseite 3 sind in etwa mit gleicher Oberflächenstruktur glatt ausgebildet Das bedeutet, dass insbesondere die Unterseite 3 nicht die üblichen sich periodisch wiederholenden Noppenstrukturen aufweist. Damit bilden die Oberseite 2 und die Unterseite 3 zwei planparallele Flächen. Auf die Unterseite 3 ist eine Beschichtung 4 und/oder Folie 4 aufgebracht. Dabei kann beispielsweise ein Siebdruckverfahren, ein Sputter- oder ein Spritzgussverfahren verwendet werden. Die Beschichtung 4 wird dabei von einem transparenten Material gebildet. Auf der der Kochfläche 1 bei der Rückseite 8 ist ein Leuchtelement 5, beispielsweise eine LED angekoppelt. Dieses Leuchtelement 5 imitiert sein Licht durch die Beschichtung 4 und durch die Kochfläche 1 hindurch. Das Licht tritt dann aus der Oberseite 2 der Kochfläche 1 aus. Zur Bildung einer Displayanzeige kann die Beschichtung 4 beispielsweise mit lichtundurchlässigen Bereichen markiert sein.

Wie die Figur weiter zeigt, kann die Beschichtung 4 auch elektrisch leitfähig als Elektrode ausgebildet sein, wobei diese Elektrode dann Teil eines berührungslosen Sensors (Touch-Sensor) ist. Die Beschichtung 4 ist mittels eines Kontaktes 6, der beispielsweise aus einem elektrisch leitfähigen Schaumstoff gebildet sein kann, an einer Steuerelektronik 7 kontaktiert. Die elektrisch leitfähige, als Elektrode dienende Beschichtung 4 kann beispielsweise im Bereich des Bedienbereiches die Touch-Elektronik (Steuerelektronik) 7 überdeckend angeordnet sein. Insbesondere ist es auch möglich, dass sich die Beschichtung ganz großflächig, insbesondere ganzflächig, über die Unterseite 3 der Kochfläche 1 erstreckt, um z. B. Touch-Funktionalitäten auch in unmittelbarer Nähe der Kochzone zu ermöglichen.

Im Rahmen der Erfindung ist es auch denkbar, im Bereich der Unterseite 3 der Kochfläche IR-Touchsensoren zu verwenden. Dabei sind die IR-Sensoren im Bereich der Unterseite 3 angeordnet. Aufgrund der glatten Ausbildung der Unterseite 3 der Glaskeramik wird ein konstanter Störsignalpegel verwirklichbar. Dies erhöht in Folge die Empfindlichkeit und senkt die Störanfälligkeit der IR-Sensoren.

## Patentansprüche

1. Glaskeramikkochfläche, mit einer eine Kochfläche (1) bildenden ebenen Oberseite (2) und einer Unterseite (3), wobei das Glaskeramik-Material der Kochfläche (1) Transmissionswerte von größer als 0,1 % im Bereich des sichtbaren Lichtes im gesamten Wellenlängenbereich größer als 420 nm, eine Lichttransmission im Sichtbaren von 0,8 - 2,5 % und eine Transmission im Infraroten bei 1600nm von 0-85% aufweist, und wobei das Glaskeramik-Material als vorherrschende Kristallphase Hochquarz-Mischkristalle aufweist,
**dadurch gekennzeichnet,**
**dass** die Unterseite eben, nicht strukturiert und planparallel zur Oberseite ausgebildet ist,
**dass** auf der Unterseite mindestens eine Beschichtung (4) und/oder eine Folie (4) aufgebracht ist,
**dass** die Beschichtung (4) und/oder Folie (4) Teil einer Anzeige ist,
**dass** die Beschichtung (4) und/oder Folie (4) eine Maskierung mit lichtdurchlässigen und lichtundurchlässigen Bereichen bildet,
und **dass** im Bereich unter der beschichteten Unterseite (3) ein Leuchtelement, beabstandet angeordnet ist.

2. Glaskeramikkochfläche nach Anspruch 1,
**dadurch gekennzeichnet,**
**dass** die Dicke der Kochfläche (1) im Bereich zwischen 2 mm und 6 mm vorzugsweise im Bereich zwischen 3 mm und 5 mm liegt.

3. Glaskeramikkochfläche nach einem der Ansprüche 1 oder 2,
**dadurch gekennzeichnet,**
**dass** die Dicke der Beschichtung (4) und/oder Folie (4) im Bereich zwischen 100 nm und 2 mm liegt.

4. Glaskeramikkochfläche nach einem der Ansprüche 1 bis 3,
**dadurch gekennzeichnet,**
**dass** die Beschichtung (4) und/oder Folie (4) mindestens bis 85 °C temperaturstabil ist.

5. Glaskeramikkochfläche nach einem der Ansprüche 1 bis 4,
**dadurch gekennzeichnet,**
**dass** die Beschichtung (4) und/oder Folie (4) metallisch, metalloxidisch, anorganisch, organisch oder nitritisch ist.

6. Glaskeramikkochfläche nach einem der Ansprüche 1 bis 5,
**dadurch gekennzeichnet,**
**dass** die der Unterseite (3) der Kochfläche (1) abgewandte Rückseite (8) der Beschichtung (4) und/oder Folie (4) mit einer Strukturierung, insbesondere einer mechanischen Oberflächenverformung oder einer thermisch eingeprägten Verformung versehen ist.

7. Glaskeramikkochfläche nach einem der Ansprüche 1 bis 6,
**dadurch gekennzeichnet,**
**dass** die Beschichtung (4) und/oder Folie (4) elektrisch isolierend ausgebildet ist.

8. Glaskeramikkochfläche nach einem der Ansprüche 1 bis 6,
**dadurch gekennzeichnet,**
**dass** die Beschichtung (4) und/oder Folie (4) elektrisch leitfähig ausgebildet ist.

9. Glaskeramikkochfläche nach Anspruch 8,
**dadurch gekennzeichnet,**
**dass** die Beschichtung (4) und/oder Folie (4) eine Induktionsspule bildet.

10. Glaskeramikkochfläche nach einem der Ansprüche 1 bis 9,
**dadurch gekennzeichnet,**
**dass** die Beschichtung (4) und/oder Folie (4) eine Elektrode eines berührungsempfindlichen Sensors (Touch-Sensor), eines Topfsensors oder eines Topfgrößensensors ist.

11. Glaskeramikkochfläche nach einem der Ansprüche 1 bis 10,
**dadurch gekennzeichnet,**
**dass** die Beschichtung (4) und/oder Folie (4) induktiv aktivierbar ist.

12. Glaskeramikkochfläche nach einem der Ansprüche 1 bis 11,
**dadurch gekennzeichnet,**
**dass** die Beschichtung (4) und/oder Folie (4) thermisch isolierend ausgebildet ist.

13. Glaskeramikkochfläche nach einem der Ansprüche 1 bis 12,
**dadurch gekennzeichnet,**
**dass** die Oberflächenrauhigkeit der Unterseite (3) der Kochfläche (1) Rₐ ≤5µm beträgt.

14. Glaskeramikkochfläche nach einem der Ansprüche 1 bis 13,
**dadurch gekennzeichnet,**
**dass** die Kochfläche (1) oder Teilbereiche der Kochfläche von einem Rahmen umgeben ist, und
**dass** der Rahmen die Unterseite (3) im Randbereich der Kochfläche (1) oder der Teilbereiche dicht umfasst.

15. Glaskeramikkochfläche nach einem der Ansprüche 1 bis 14,
**dadurch gekennzeichnet,**
**dass** der Ausdehnungskoeffizient des Glaskeramik-Materials der Kochfläche ≤2˙10⁻⁶ 1/K im Temperaturbereich von 20 - 700 °C beträgt.

16. Glaskeramikkochfläche nach einem der Ansprüche 1 bis 15,
**dadurch gekennzeichnet,**
**dass** das Leuchtelement eine 7-Segment-Anzeige oder ein grafischer Display ist.

## Claims

1. A glass-ceramic cooktop having a flat upper side (2) forming a cooktop (1) and an underside (3), wherein the glass-ceramic material of the cooktop (1) has transmittance values greater than 0.1% in the visible light region in the entire wavelength range greater than 420 nm, a light transmittance in the visible range of 0.8-2.5% and a transmittance in the infrared at 1600 nm of 0-85%, and wherein the glass-ceramic material has high quartz mixed crystals as the predominant crystal phase,
**characterized in**
**that** the underside is flat, non-structured and plane-parallel to the upper side,
in that at least one coating (4) and/or a film (4) is applied to the underside,
in that the coating (4) and/or film (4) is part of a display,
in that the coating (4) and/or film (4) forms a masking with translucent and opaque regions
and in that a lighting element is disposed at a distance in the region under the coated underside (3).

2. Glass-ceramic cooktop according to claim 1,
**characterized in**
**that** the thickness of the cooktop (1) is in the range between 2 mm and 6 mm, preferably in the range between 3 mm and 5 mm.

3. Glass-ceramic cooktop according to one of claims 1 or 2,
**characterized in**
**that** the thickness of the coating (4) and/or film (4) is in the range between 100 nm and 2 mm.

4. Glass-ceramic cooktop according to one of claims 1 to 3,
**characterized in**
**that** the coating (4) and/or film (4) is temperature-stable at least up to 85°C.

5. Glass-ceramic cooktop according to one of claims 1 to 4,
**characterized in**
**that** the coating (4) and/or film (4) is metallic, metal oxidic, inorganic, organic or nitritic.

6. Glass-ceramic cooktop according to one of claims 1 to 5,
**characterized in**
**that** the back side (8) of the coating (4) and/or film (4) facing away from the underside (3) of the cooktop (1) is provided with a structuring, in particular a mechanical surface deformation or a thermally embossed deformation.

7. Glass-ceramic cooktop according to one of claims 1 to 6,
**characterized in**
**that** the coating (4) and/or film (4) is designed to be electrically insulating.

8. Glass-ceramic cooktop according to one of claims 1 to 6,
**characterized in**
**that** the coating (4) and/or film (4) is designed to be electrically conductive.

9. Glass-ceramic cooktop according to claim 8,
**characterized in**
**that** the coating (4) and/or film (4) forms an induction coil.

10. Glass-ceramic cooktop according to any one of claims 1 to 9,
**characterized in**
**that** the coating (4) and/or film (4) is an electrode of a touch sensor, a pot sensor or a pot size sensor.

11. Glass-ceramic cooktop according to one of claims 1 to 10,
**characterized in**
**that** the coating (4) and/or film (4) can be inductively activated.

12. Glass-ceramic cooktop according to one of claims 1 to 11,
**characterized in**
**that** the coating (4) and/or film (4) is designed to be thermally insulating.

13. Glass-ceramic cooktop according to one of claims 1 to 12,
**characterized in**
**that** the surface roughness of the underside (3) of the cooktop (1) is Rₐ ≤ 5 µm.

14. Glass-ceramic cooktop according to one of claims 1 to 13,
**characterized in**
**that** the cooktop (1) or partial areas of the cooktop are surrounded by a frame, and
in that the frame tightly encloses the underside (3) in the edge region of the cooktop (1) or of the partial regions.

15. Glass-ceramic cooktop according to one of claims 1 to 14,
**characterized in**
**that** the coefficient of expansion of the glass-ceramic material of the cooktop is ≤ 2.10⁻⁶ 1/K in the temperature range of 20 - 700 °C.

16. Glass-ceramic cooktop according to one of claims 1 to 15,
**characterized in**
**that** the lighting element is a 7-segment display or a graphic display.

## Revendications

1. Surface de cuisson en vitrocéramique ayant une face supérieure plane (2) formant une surface de cuisson (1) et une face inférieure (3), dans laquelle le matériau vitrocéramique de la surface de cuisson (1) a des valeurs de transmission supérieures à 0,1 % dans la région de la lumière visible dans toute la gamme de longueurs d'onde supérieure à 420 nm, une transmission de la lumière dans le visible de 0,8 à 2,5 % et une transmission dans l'infrarouge à 1600 nm de 0 à 85 %, et dans laquelle le matériau vitrocéramique a des cristaux de solution solide de quartz bêta comme phase cristalline prédominante,
**caractérisée**
**en ce que** la face inférieure est plate, non structurée et plane-parallèle à la face supérieure,
**en ce qu'**au moins un revêtement (4) et/ou un film (4) est appliqué sur la face inférieure,
**en ce que** le revêtement (4) et/ou le film (4) fait partie d'un écran,
**en ce que** le revêtement (4) et/ou le film (4) forme un masquage avec des zones translucides et opaques,
et **en ce qu'**un élément d'éclairage, espacé, est disposé dans la région située sous la face inférieure revêtue (3).

2. Surface de cuisson en vitrocéramique selon la revendication 1,
**caractérisée**
**en ce que** l'épaisseur de la surface de cuisson (1) est comprise entre 2 mm et 6 mm, de préférence entre 3 mm et 5 mm.

3. Surface de cuisson en vitrocéramique selon l'une des revendications 1 ou 2,
**caractérisée**
**en ce que** l'épaisseur du revêtement (4) et/ou du film (4) est comprise entre 100 nm et 2 mm.

4. Surface de cuisson en vitrocéramique selon l'une des revendications 1 à 3,
**caractérisée**
**en ce que** le revêtement (4) et/ou le film (4) est stable en température au moins jusqu'à 85°C.

5. Surface de cuisson en vitrocéramique selon l'une des revendications 1 à 4,
**caractérisée**
**en ce que** le revêtement (4) et/ou le film (4) est métallique, oxyde métallique, inorganique, organique ou nitrite.

6. Surface de cuisson en vitrocéramique selon l'une des revendications 1 à 5,
**caractérisée**
**en ce que** la face arrière (8) du revêtement (4) et/ou du film (4) opposée à la face inférieure (3) de la surface de cuisson (1) est pourvue d'une structuration, en particulier d'une déformation mécanique de la surface ou d'une déformation impressionnée thermiquement.

7. Surface de cuisson en vitrocéramique selon l'une des revendications 1 à 6,
**caractérisée**
**en ce que** le revêtement (4) et/ou le film (4) est électriquement isolant.

8. Surface de cuisson en vitrocéramique selon l'une des revendications 1 à 6,
**caractérisée**
**en ce que** le revêtement (4) et/ou le film (4) sont électriquement conducteurs.

9. Surface de cuisson en vitrocéramique selon la revendication 8,
**caractérisée**
**en ce que** le revêtement (4) et/ou le film (4) forment une bobine d'induction.

10. Surface de cuisson en vitrocéramique selon l'une des revendications 1 à 9,
**caractérisée**
**en ce que** le revêtement (4) et/ou le film (4) est une électrode d'un capteur tactile, d'un capteur de pot ou d'un capteur de taille de pot.

11. Surface de cuisson en vitrocéramique selon l'une des revendications 1 à 10,
**caractérisée**
**en ce que** le revêtement (4) et/ou le film (4) peuvent être activés par induction.

12. Surface de cuisson en vitrocéramique selon l'une des revendications 1 à 11,
**caractérisée**
**en ce que** le revêtement (4) et/ou le film (4) est conçu pour être thermiquement isolant.

13. Surface de cuisson en vitrocéramique selon l'une des revendications 1 à 12,
**caractérisée**
**en ce que** la rugosité de la face inférieure (3) de la surface de cuisson (1) est Ra ≤ 5 µm.

14. Surface de cuisson en vitrocéramique selon l'une des revendications 1 à 13,
**caractérisée**
**en ce que** la surface de cuisson (1) ou des zones partielles de la surface de cuisson sont entourées d'un cadre, et
**en ce que** le cadre entoure de manière étanche la face inférieure (3) dans la région du bord de la surface de cuisson (1) ou dans les régions partielles.

15. Surface de cuisson en vitrocéramique selon l'une des revendications 1 à 14,
**caractérisée**
**en ce que** le coefficient de dilatation du matériau vitrocéramique de la surface de cuisson est ≤ 2.10-6 1/K dans la plage de température de 20 à 700 °C.

16. Surface de cuisson en vitrocéramique selon l'une des revendications 1 à 15,
**caractérisée**
**en ce que** l'élément d'éclairage est un affichage à 7 segments ou un affichage graphique.
